# EUROPEAN PATENT APPLICATION

(11) **EP 3 669 659 A1**
(43) Date of publication of application: **24.06.2020**
(21) Application number: 18464007.6
(22) Date of filing: 20.12.2018
(51) Int. Cl.: A23B 7/08, A23L 21/12

(54) **PRODUCTS AND CONSERVATION WITHOUT BOILING FOR FRUITS, VEGETABLES AND EDIBLE FLOWER PETALS**

(71) Applicant: Pascu, Constantin, Bucuresti (RO); Tarasi, Daciana Anca, Bucuresti (RO)
(72) Inventor: Pascu, Constantin, Bucuresti (RO); Tarasi, Daciana Anca, Bucuresti (RO)
(74) Representative: Apostol, Salomia

(57) **Abstract**

SUMMARY

Products and processes for their obtaining by conservation without boiling of fruits, vegetables and edible flower petals, are intended for obtaining products for human food consumption. The acquirement process consists of several mixing steps without boiling. There are chosen the fruits, vegetables, edible flower petals that can be fresh or chilled, plain or mixed, not dehydrated or a little dehydrated, macerated, possibly held under cold conditions, which are mixed with a solution of minimum 70% sugars, which can be honey, with a ratio of 1/1.5 to 1/15 depending on the water content of vegetal part and the desired ratio of the final composition, mixture that undergoes a slow dehydrating process at temperatures between 25-45 degrees Celsius, for 2-20 days, it is mixed daily until a refractive measured water content less than 25% is reached, in the end the mixture is poured into closed glass containers and kept at temperatures below 20 degrees Celsius or pasteurized.

The products maintain the largest part of the natural components, have a firm texture in the composition, when they are processed whole or in pieces, greatly keep the taste and odor, have the syrup transparency and pleasant color, and for the versions than do not call for the product final sterilization, keep the honey components unaltered.

## Description

The invention relates to products and the processes for their obtaining by conservation without boiling of fruits, vegetables and edible flower petals, getting products intended for human food consumption.

It is widely known the conservation of fruits, vegetables, flower petals and other various edible plants by boiling in sugary solutions. Sugars come from the respective fruits, vegetables or petals and from additional sugar as concentrated fruit juices or various syrups rich in sugars may be added. The mixtures are boiled for impregnating the fruits, vegetables, flower petals with sugars and getting a sugar concentration to ensure conservation. In many cases jellying agents, such as pectin, xanthan guar, are added to ensure the syrup consistency. Finally, after packing in jars, they are pasteurized or sterilized through heating to temperatures generally over 70 degrees Celsius, up to the water boiling temperature.

Through these methods there can be achieved products with maintaining in a certain measure of the integrity of fruits, vegetables, petals or their altering in a mixture that can reach up to a puree.

The disadvantage of these methods is the fact that, by boiling, much of the valuable components, in fruits or other used plant products, are lost. Those with more fragile textures, such as raspberries, blackberries, etc., largely lose their structure. Those with stronger textures are strongly affected by boiling and that is why there are used boiling methods at lower temperatures, possibly under vacuum, in multiple stages, affecting less but still significantly the appearance and composition of fruits.

It is known that by such processes there is a large loss of valuable components of the fruits, vegetables or petals due to processing temperature, temperature which, even when working in a vacuum, it is over 60 degrees Celsius.

There are known procedures for obtaining of jams with fruits in pieces or as puree jams where sucrose or sugars syrups are used, such as apple, maple, agave, corn syrups which are heat processed and do not contain temperature sensitive components. The high processing temperature does not allow using honey in these recipes - for honey there are not recommended processing temperatures higher than 45 degrees C due to biologically valuable micro-components which are sensitive to temperature.

There are also well-known methods that use honey as source of sugars by mixing, at usual temperature, fruits with honey, usually in mass ratios fruit-honey of 1/4-1/8 fruit-honey, in which a diluted syrup forms and the obtained product can be kept a limited time of 6-14 days and only in cold conditions, due to the high risk of syrup fermentation

It is known the invention patent MD 1548 G2 which presents a process for obtaining jams out of fruit and gooseberry by boiling the mass of fruit under vacuum in which citric acid in initially added and then there are added sucrose, starch, xanthan gum and guar.

There is known the invention patent CN103445042A which initially has a phase of consolidating the fragile structure of the strawberries at 40 degrees Celsius in pectin esterase and calcium lactate over which there was added a concentrated solution of sugar in water, glucose syrup, gelling agent at 70 degrees C and the viscosity can be controlled with salts by pH adjustment.

There is known for invention patent RO 128794, diffusion production process of fruit jams without added sugar. For the fruit jams, the process uses an apple concentrated juice at 55-60 degrees C in which various fruits, petals or vegetables are added, they are boiled under vacuum at 60-70 degrees C for 10-25 minutes with a boiling discontinuation of 10-70 minutes in 3-5 cycles then with boiling and concentration 15 minutes at 65-70 degrees and addition of lemon juice.

There is known the invention patent CN 103125791 where it is described a process for obtaining banana jam using a mixture of chunks of peeled bananas, apples, lemon juice and sugar that are slowly heated up together until boiling, being transformed into a puree jam which is then packed.

The disadvantages of all these procedures are the processing by boiling that largely destroys the nutrient components, affects the major organoleptic characteristics, the fruit structure, does not permit the use of bees' honey, uses components known as belonging to E class substances not recommended by nutritionists, such as xanthan gum, guar, citric acid

The technical problem which the invention solves is achieving products out of fruits, vegetables, flower petals and various edible plants, without boiling, by the initial permeabilization of the vegetal component structure and long-term slow contact, which allows both soaking the vegetable components with a saturated solution of sugars and the removal of water from the syrup, obtaining final products without destroying the micro-components, keeping the texture and aroma very near the natural ones.

The invention removes the disadvantages mentioned above in that, in a first stage, there are chosen the fruits, vegetables, edible flower petals that can be fresh or chilled, plain or mixed, not dehydrated or a little dehydrated, macerated, possibly held under cold conditions, which are mixed with a solution with minimum 70% sugars, with a ratio of 1/1.5 to 1/15 depending on the water content of the vegetable part and the desired ratio of the final composition, mixture that undergoes a slow dehydrating process at temperatures between 25-45 degrees Celsius, for 2-20 days, it is mixed daily until a water content less than 25% , measured with a refractometer, is reached; in the end the mixture is poured into closed glass containers and kept at temperatures below 20 degrees Celsius or pasteurized.

The fruits, vegetables, edible flower petals in the frozen state are maintained at temperatures between -10 and -20 degrees Celsius and the defrosting is done slowly at temperatures of 10 to 25 degrees Celsius.

The fruits, vegetables, edible flower petals can be used partially dried by treatment at an optimum temperature of 40 degrees Celsius, 1-6 hours, in the form of pieces of 8-12 mm or paste.

The fruits, vegetables, petals of edible flowers can be used plainly or in mixtures in various proportions.

The solution of sugars is honey of various sorts, preferably hardly crystal-forming, or various concentrated syrups: concentrated apple syrup, corn syrup, agave syrup, grape syrup, maple syrup, sugar syrup, inverted sugar syrup.

Fruits, vegetables, edible flower petals can be subjected, before mixing with the sugar syrup, to a process of structure permeability of vegetal materials by wetting or immersion in solutions of food organic acids of acetic, citric, tartaric, malic, ascorbic acid type, maintaining them under cold conditions, below 10 degrees Celsius for 2-48 hours.

Products that don't have honey in the mixture, packed in sealed jars, can be pasteurized on water bath brought to boiling for 20-40 min and then kept at 10°C for 4 hours. The mixture in sealed jars does not start to boil under the mentioned working conditions.

During the dehydrating process, there can be added small amounts of syrups or aromatic combinations, seasonings, herbs for the fine adjustment in taste, such as lemon juice, white buckthorn juice, cherry syrup, cinnamon, cloves, cardamom, etc.

The used ingredients, preserved under procedures without boiling, by slow dehydration, result in similar products which are identified in the form of jams with fruit pieces, puree jams, jelly, maintain the largest part of the natural components of fruits, vegetables or flower petals, have a firm texture in the composition, when the vegetal parts are processed whole or in pieces, retain the characteristics of the natural product, taste, color and odor, have the syrup transparency and natural color, keep the honey components unaltered.

The used ingredients, preserved under procedures without boiling, by slow dehydration, using honey, result in similar products identified under the form of jams with fruit pieces, puree jams, jelly, keep the main components of the honey unaltered, fulfill the function of a nutritional supplement.

The process of conservation without boiling of fruits, vegetables, flower petals, according to the invention, demonstrates the following advantages:
- Keeps most of the natural components of ingredients: fruit, flower petals, vegetables and sugars
- Honey can be used in case of processing at temperatures below 45 degrees C, ensuring the product conservation by the antiseptic effect of concentrated sugars
- The taste and smell characteristics of components are kept, the final products having very strong original components taste and smell
- The processing of entire fruits preserves their texture, the final product having a very pleasant visual appearance.
- It allows obtaining products from fruits that are fragile in the classic processing, such as raspberries, strawberries
- It allows a very fine control in the taste and flavor of the final product by the possibility of gradually adding various ingredients during the technological process that is slow.

Here are further examples of the invention.

The processes according to the invention and the products resulting from the processing technology at low temperatures, below 60 degrees Celsius, preferably between 25-45 degrees Celsius, enables the development of products with an appearance similar to classic jams with fruits pieces and puree jams, without boiling, keeping most of the components of the fruit, vegetables or flower petals, maintaining their firm texture within the composition when processed whole or in pieces, keeping much of the taste and smell, ensuring a very pleasant

syrup transparency and color, and in the technological variants that do not require a final sterilization of the product, it allows the use of honey as external source of sugars, whose characteristics are contained in the final product through the processing conditions below 45 degrees Celsius.

The process involves structure permeability stages for fresh or frozen fruits, vegetables, flower petals by treatment with food acids, long contact with the sugar solution, possibly in the presence of the vacuum and the periodic or continuous mixing, in a dehydrating environment, for the water content decrease.

There can be obtained a wide range of new products, made by processing without boiling, at temperatures that ensure the maximum preservation of the natural components present in the used fruits, vegetables, flower petals and sugary syrups.

The conservation process and products of fruits, vegetables and edible flower petals, according to the invention, has the choice of ingredients as first stage.

There can be used fruits, vegetables, edible flower petals all fresh or frozen at temperatures between -10 and -20 degrees Celsius.

There can be also used fruits, vegetables, edible flower petals partially dried in chunks of up to 8-12 mm or paste.

Drying is done in a dehydrator at a temperature of 40 degrees Celsius for about 1-6 hours.

There can be also optionally done a mixture of the plant material with food organic acid, for example, citric acid, malic acid, tartaric acid, acetic acid for the structure permeability, color and taste maintaining.

For recipes, there can be chosen to mix lemon juice, sour cherry juice or sour apple juice for the structure permeability, maintaining the color as for the rose petals or quinces, reducing the sweet taste perception.

In another stage, there is prepared a concentrated sugar solution, which can be honey, concentrated apple syrup, corn syrup, agave syrup, grape syrup, maple syrup, sugar syrup, invert sugar syrup.

The solution concentration is required to be a minimum of 70% by mass of the sugars, i.e. 70 degrees Brix by refractive measurement.

This concentrated solution is mixed with fruits, vegetables, edible flower petals in a ratio from 1-1.5 to 1-15.

The proportion is chosen depending on the water content of the vegetal part and the desired final ratio between fruit and syrup in the packing recipient.

The process involves the whole or chopped fruit admixture, in the sugary syrup, which can be honey, apple syrup, maple syrup, agave syrup, maize syrup, sugar syrup or invert sugar syrup or any other source of sugars.

The obtained mixture is subjected to a slow dehydrating process till the level where the syrup is concentrated at the advisable consistency or ready to ensure preservation. For the chopped fruit mixture, the advisable consistency is observed.

The mixture is dehydrated in stainless steel trays, in a layer with a thickness of 3-7 cm, at a temperature between 25-45 degrees Celsius, for 2-20 days, in order to get a refractory measured water content under 25%, preferably under 20%.

During the dehydrating process, there can be added small amounts of syrups or aromatic combinations, seasonings, herbs for the fine adjustment in taste, such as lemon juice, white buckthorn juice, cherry syrup, cinnamon, cloves, cardamom, etc.

The mixture can be also put into a stainless-steel rotating drum, for example of 1000 mm in length and 500 mm in diameter, with internal blades, where the mixture is up to 25% of the volume.

The drum is heated at 40 degrees Celsius, it has a vacuum pump and is slowly rotating at 1-6 rpm. The mixture is let to reach a viscosity that still allows the slow flow inside the drum. After about 3 days, humidity is 23% and the process is stopped.

In a last step, the obtained mixtures are put in glass recipients closed with a lid.

When using honey, when the final product humidity is less than 20%, it is kept without additional sterilization. It is known the very strong antiseptic capacity of concentrated sugars.

It is recommended to keep the products at a temperature below 20 degrees Celsius, preferably 8-10 degrees Celsius.

If the humidity of the final product is 23-25%, pasteurization is required. This option rules out the use of honey.

Pasteurization is made with the mixture put in closed glass recipients treated for 20-40 minutes on water bath at boiling point. The jars are placed then at 10°C for 4 hours.

### Example 1

Sour cherries - after extracting the stones, they are left in a refrigerator at 8 degrees C for 12-24 hours and then they are mixed with acacia honey, with the humidity refractive measured of 18%, in a stainless-steel tray, at a fruit-honey ratio of 1-1.2 1-4, preferably 1-2.5, ensuring a 4 cm thick layer of mixture in the stainless steel tray. The stainless-steel tray with the mixture is introduced into a dehydration cabinet at 38 degrees C and humidity under 25%. Stir daily 1-3 times for homogenization. Syrup humidity is measured with a refractometer. After 8-12 days, when the humidity drops below 18%, the process is stopped and the product is packed directly in glass jars with lids.

### Example 2

Apricots - after extraction of stones and portioning in chunks of 8-12 mm, they are preserved by freezing and stored at -20 degrees Celsius. For processing, the frozen product is slowly defrosted through maintaining at 20 degrees C for 10 hours. Fresh lemon juice is added in a ratio of 5% by mass of apricots for maintaining the color and sweet taste attenuation. It is mixed with poly flowers honey, with the humidity refractive measured of 18%, in a stainless-steel tray, at a fruit-honey ratio of 1-2, ensuring a 4 cm thick layer of mixture in the stainless-steel tray. The stainless-steel tray with the mixture is introduced into a dehydration cabinet at 38 degrees C and humidity under 25%. Stir daily 1-3 times for homogenization. Syrup humidity is measured with a refractometer. After 8-12 days, when the humidity drops below 18%, the process is stopped and the product is packed directly in glass jars with lids.

### Example 3

Bitter cherries - after extracting the stones, they are mixed with concentrated apple syrup with a Brix index of 70% in a stainless-steel tray, at a fruit-apple syrup ratio of 1-1.2 1-4, preferably 1-2.8, ensuring a 4 cm thick layer of mixture in the stainless-steel tray. The stainless-steel tray with the mixture is introduced into a dehydration cabinet at 45 degrees C and humidity under 25%. Stir daily 1-3 times for homogenization. Syrup humidity is measured with a refractometer. After 8-10 days, when the humidity drops below 25%, the process is stopped and the product is packed directly in glass jars with lids. The closed jars are pasteurized on water bath brought to boiling for 30 min and then are kept in the fridge at 10°C for 4 hours.

### Example 4

The peach paste obtained from fresh fruit with a manual device is mixed with concentrated apple syrup with a Brix index of 70% in a fruit paste - apple syrup mass ratio of 1-1.2 1-4, preferably 1-2.8, in a rotating drum of stainless steel, 1000 mm in length and 500 mm in diameter, with inside blades, in which the mixture represents up to 25% of the volume. The drum is heated at 40 degrees Celsius, it has a vacuum pump and is slowly rotating at 1-6 rpm. The mixture is let to reach a viscosity that still allows the slow flow inside the drum. During the process, the mixture taste can be adjusted by adding lemon juice up to 5% of the mixture mass or buckthorn juice up to 1% of the mixture mass. After about 3 days, humidity is 23% and the process is stopped.

In a last step, the obtained mixture is put in glass recipients closed with a lid.

The closed jars are pasteurized for 30 minutes on water bath brought to boiling and then are kept in the fridge at 10°C for 4 hours.

### Example 5

The rose petals are mixed with lemon juice in petals - lemon mass ratio of 5-1 to 2-1 and are maintained at 8 degrees Celsius for 24-48 hours. The petals and lemon juice mixture is put in stainless-steel trays with acacia honey, at a ratio of 2-1 up to 15-1, preferably 5-1, ensuring a 4 cm thick layer of mixture in the stainless steel tray. The stainless-steel tray with the mixture is introduced into a dehydration cabinet at 38 degrees C and humidity under 25%. Stir daily 1-3 times for homogenization. Syrup humidity is measured with a refractometer. After 8-10 days, when the humidity drops below 18%, the process is stopped and the product is packed directly in glass jars with lids.

### Example 6

Strawberries - they are partially dehydrated in a dehydrator at 40 degrees Celsius for 4 hours when they lose about 50% of the initial mass and their structure becomes thick. It is mixed with acacia honey, with the humidity refractive measured of 18%, in a stainless-steel tray, at a fruit-honey ratio of 1-1.2 1-4, preferably 1-2, ensuring a 4 cm thick layer of mixture in the stainless-steel tray. The stainless-steel tray with the mixture is introduced into a dehydration cabinet at 38 degrees C and humidity under 25%. Stir daily 1-2 times for homogenization. Syrup humidity is measured with a refractometer. After 12-14 days, when the humidity drops below 18%, the process is stopped and the product is packed directly in glass jars with lids.

### Example 7

A mixture of 40% by mass of blackberries, 40% blueberries, 15% raspberry, 5% buckthorn is frozen and stored for 4 months at -20 degrees Celsius. For processing, the frozen product is slowly defrosted through maintaining at 20 degrees C for 10 hours. It is mixed with acacia honey, with the humidity refractive measured of 18%, in a stainless-steel tray, at a fruit-honey ratio of 1-2, ensuring a 4 cm thick layer of mixture in the stainless-steel tray. The stainless-steel tray with the mixture is introduced into a dehydration cabinet at 38 degrees C and humidity under 25%. Stir daily 1-3 times for homogenization. After 5 processing days, the taste is adjusted by gradually adding lemon juice up to 2-4% of the total mass. Syrup humidity is measured with a refractometer. After 10-12 days, when the humidity drops below 18%, the process is stopped and the product is packed directly in glass jars with lids.

## Claims

1. **Process of preservation without boiling of fruits, vegetables, edible flower petals,** in a mixture with sugars coming from the fruits, respectively vegetables, edible flower petals and additional sugar, concentrated fruit juices or various syrups rich in sugars, **characterized in that,** in a first stage, there are chosen the fruits, vegetables, edible flower petals that can be fresh or chilled, plain or mixed, not dehydrated or a little dehydrated, macerated, possibly held under cold conditions, which are mixed with a solution with minimum 70% sugars, with a ratio of 1/1.5 to 1/15 depending on the water content of vegetable part and the desired ratio of the final composition, mixture that undergoes a slow dehydrating process at temperatures between 25-45 degrees Celsius, for 2-20 days, it is mixed daily until a refractive measured water content less than 25% is reached, in the end the mixture is poured into closed glass containers and kept at temperatures below 20 degrees Celsius or pasteurized.

2. **Process of preservation, without boiling the fruits, vegetables, edible flower petals, according to claim 1, characterized in that** the fruits, vegetables, edible flower petals, used singly or in mixtures, in frozen state, are maintained at temperatures between -10 and -20 degrees Celsius, defrosting is done slowly, at temperatures of 10 to 25 degrees Celsius.

3. **Process of preservation, without boiling the fruits, vegetables, edible flower petals, according to claim 1, characterized in that** the fruits, vegetables, edible flower petals can be used partially dehydrated, singly or in mixtures, at an optimal temperature of 40 degrees Celsius, 1-6 hours, in the form of chunks of 8-12 mm or paste.

4. **Process of preservation, without boiling the fruits, vegetables, edible flower petals, according to claim 1, 2 and 3, characterized in that the** sugar solution is honey from various sorts, preferably hardly crystal-forming.

5. **Process of preservation, without boiling the fruits, vegetables, edible flower petals, according to claim 1, 2, 3 and 4 characterized in that the** sugar solution is concentrated apple syrup, corn syrup, agave syrup, grape syrup, maple sugar, sugar, inverted sugar.

6. **Process of preservation, without boiling the fruits, vegetables, edible flower petals, according to claim 1, 2, 3, 4 and 5 characterized in that the** fruits, vegetables, edible flower petals can be subjected, before mixing with the sugar syrup, to a process of structure permeability by wetting or immersion in solutions of food organic acids of acetic, citric, tartaric, malic, ascorbic acid type, maintaining them under cold conditions, below 10 degrees Celsius for 2-48 hours.

7. **Process of preservation, without boiling the fruit, vegetables, edible flower petals, according to claim 1, 2, 3, 4, 5 and 6, characterized in that** the products which do not have honey in the mixture, packed in sealed jars, are pasteurized on a water-bath at boiling point for 20-40 minutes and are kept at 10 degrees C for 4 hours.

8. **Process of preservation, without boiling the fruits, vegetables, edible flower petals, according to claim 1, 2, 3, 4, 5, 6 and 7, characterized in that** during the dehydrating process there can be added small amounts of syrups or aromatic combinations, seasonings, herbs for the fine adjustment in taste, such as lemon juice, white buckthorn juice, sour cherry syrup, cinnamon, cloves, cardamom, etc.

9. **Products according to the processes of preservation without boiling of fruits** , **vegetables and edible flower petals, according to claim 1, 2, 3, 4, 5, 6, 7 and 8, characterized in that** they are obtained by processes of preservation without boiling by the initial permeabilization of the plant component structure and by slow dehydration, the final result being similar products which are identified in the form of jams with fruit pieces ,puree jams, jelly, paste, maintain the largest part of the natural components of fruits, vegetables or flower petals, have a firm texture in the composition, when they are processed whole or in pieces, retain the characteristics of the natural product, taste, color and odor, have the syrup transparency and natural color, keep the honey components unaltered.

10. **Products according to the processes of preservation without boiling of fruits, vegetables and edible flower petals, according to claim 1, 2, 3, 4, 5, 6, 7, 8 and 9, characterized in that** the used ingredients, preserved under procedures without boiling, by slow dehydration, using honey, result in similar products identified under the form of jams with fruit pieces ,puree jams,, jelly, paste, keep the main components of the honey unaltered, fulfill the function of a nutritional supplement.

## Amended claims

### Amended claims in accordance with Rule 137(2) EPC.

1. Conservation process without boiling of fruits, vegetables, edible flower petals, mixed with sugars, which come from fruits, vegetables, edible rose petals respectively and additionally concentrated fruit juices, various syrups rich in sugars, **characterized in that,** in a first stage, there are chosen the fruits, vegetables, edible flower petals that can be fresh, frozen, kept under temperatures between -10 -20 degrees Celsius, simple, mixed, not dehydrated, dehydrated at an optimal temperature of 40 degrees Celsius, for 1- 6 hours, macerated, under cold conditions, pasta, whole, pieces of 8-12 mm which are mixed with honey with a content of minimum 70% sugars, with a fruit/honey ratio of 1/1.5 to 1/15 depending on the water content and the desired fruit-sugars ratio of the final composition, mixture that undergoes a dehydrating process at temperatures between 25-45 degrees Celsius, for 2-20 days, it is mixed daily until a refractive measured water content less than 25% , optimum 18 %, is reached, the mixture with a thickness of 3-7 cm for improving the taste of the finished product, during the dehydration process of 2-20 days there is added maximum 5% of the mass of the mixture: syrups, aromatic compounds, spices, aromatic plants, lime juice, buckthorn syrup, cherry syrup, cinnamon, cloves, cardamom.

2. Preservation process, without boiling of fruit, vegetables, petals of edible flowers, according to claim 1, **characterized by the fact that** in one variant honey is replaced by other solutions with at least 70% sugars respectively concentrated apple syrup, corn syrup, agave syrup, grape syrup, maple syrup, and the final products packed in sealed in glass containers are pasteurized on a water bath by boiling for 20-40 min immediately followed by keeping them at 10 degrees C for 4 hours.

3. Product obtained by the boiling-free preservation process of edible fruits, vegetables and flower petals, according to claims 1 and 2, **characterized in that** the used ingredients, preserved according to the boiling-free process, by dehydration in the interval of 2-20 days, result in products with syrup humidity of maximum 25%, optimum 18%, which retain their natural components, taste, color, aroma, shape, texture, the final mixture is packed in closed glass containers and stored at temperatures below 20 degrees Celsius.
